# EUROPÄISCHE PATENTSCHRIFT

(11) **EP 3 662 145 B1**
(45) Veröffentlichungstag und Bekanntmachung des Hinweises auf die Patenterteilung: **28.07.2021**
(21) Anmeldenummer: 18800504.5
(22) Anmeldetag: 24.10.2018
(51) Int. Cl.: F01K 7/38, F01K 7/44

(54) **VERBESSERTES VERFAHREN ZUR STROMERZEUGUNG BEI DER REGASIFIZIERUNG EINES FLUIDS DURCH ÜBERKRITISCHE ENTSPANNUNG**
IMPROVED METHOD FOR POWER GENERATION IN THE RE-GASIFICATION OF A FLUID BY MEANS OF SUPERCRITICAL RELAXATION
PROCÉDÉ AMÉLIORÉ DE GÉNÉRATION D'ÉLECTRICITÉ LORS DE LA REGAZÉIFICATION D'UN FLUIDE PAR RÉDUCTION DE PRESSION SURCRITIQUE

(30) Priorität: 27.11.2017 EP 17203813
(43) Veröffentlichungstag der Anmeldung: 10.06.2020
(73) Patentinhaber: Siemens Energy Global GmbH & Co. KG, 81739 München (DE)
(72) Erfinder: HAAS, Sebastian, 91301 Forchheim (DE)
(74) Vertreter: Maier, Daniel Oliver
(86) Internationale Anmeldenummer: PCT/EP2018/079128
(87) Internationale Veröffentlichungsnummer: WO 2019/101461

(56) Entgegenhaltungen:
- US-A- 3 523 421
- US-A1- 2006 254 251
- US-A1- 2007 101 732
- US-A1- 2008 190 106
- US-A1- 2010 154 471
- US-A1- 2012 151 926

## Beschreibung

Die Erfindung betrifft eine Vorrichtung zur Stromerzeugung bei Regasifizierung sowie ein entsprechendes Verfahren zur Stromerzeugung.

Im Kraftwerksbau geht der Trend weg von großen, fossilbefeuerten Kraftwerken hin zu erneuerbarer Energieerzeugung wie Wind, Photovoltaik etc. Zudem spielt auch die dezentrale Energieerzeugung eine größere Rolle.

Um den Anforderungen an Netzstabilität und Versorgungssicherheit Rechnung zu tragen, werden in Zukunft Speicherlösungen immer wichtiger. Dabei steht neben den speziellen Anforderungen der jeweiligen Anwendung wie immer auch die Wirtschaftlichkeit im Vordergrund. Energiespeicher sollen langlebig und schnell verfügbar sein, die Umwelt nicht mit giftigen Stoffen belasten, unabhängig von den geographischen Gegebenheiten sein, einen großen Leistungsbereich, Energieinhalt und einen hohen Wirkungsgrad haben und am besten noch kostengünstig sein.

Eine Möglichkeit ist die Energiespeicherung in Form von flüssiger Luft (LAES=liquid air energy storage). Die LAES-Technologie befindet sich noch in der Anfangsphase und es scheint noch Potential für Verbesserungen und weitere Kostenreduktion vorhanden zu sein. Kurz zusammengefasst besteht das LAES-Verfahren für einen reinen Speicherprozess aus einem Luftverflüssiger, einem Tank für flüssige Luft und einer Rückverstromungseinheit, in welcher die flüssige Luft auf hohen Druck gepumpt, verdampft und in einer Turbine mehrstufig mit Zwischenaufheizung entspannt wird. Um den Wirkungsgrad zu steigern, kann die bei der Luftverflüssigung anfallende Kompressionswärme gespeichert und im Rückverstromungszyklus dazu verwendet werden, die Luft vor dem Turbineneintritt auf eine höhere Temperatur zu bringen.

Genauso kann im Rückverstromungszyklus bei der Verdampfung der Luft anfallende "Kälte" gespeichert werden, um den Energieaufwand im Verflüssigungszyklus zu minimieren.

Zudem gibt es auch Kombinationen von LAES mit anderen Verfahren wie z.B. Gasturbinenprozessen. Außerdem kann sonst verworfene Kälte z.B. von Flüssigerdgasverdampfern vorteilhaft in LAES eingebunden werden. Gleiches gilt für niederwertige Abfallwärme von Industrieprozessen, die auf Grund der niedrigen unteren Prozesstemperatur des LAES-Verfahrens noch wirtschaftlich genutzt werden kann.

Als Kältespeicher können organische Verbindungen genannt werden, die im Gegenzug zur verdampften Luft verflüssigt werden. Vor allem die Reduktion der Investitionskosten scheint aktuell für einen kommerziellen Durchbruch wichtig zu sein. Erdgas wird zu Transportzwecken verflüssigt, wofür viel Energie aufgewendet werden muss. In LNG-Terminals wird flüssiges Erdgas (Liquid Natural Gas = LNG) auf Druck gebracht, verdampft und in eine Pipeline eingespeist.

Um das Potential der im Flüssigerdgas vorhandenen Kälte zur Stromerzeugung zu nutzen und einen Teil der für die Verflüssigung aufgewendeten Energie wiederzugewinnen, gibt es bislang nur Verfahren, die einen geringen Wirkungsgrad bieten und/oder teuer und aufwändig sind. In der Regel wird mit Verfahren gearbeitet, welche zusätzliche Arbeitsmedien erfordern und viele Komponenten beinhalten. Die Verfügbarkeit ist gering und die Komplexität dafür umso höher.

Das Dokument US 2010/154471 A1 offenbart eine Anlage aus dem Stand der Technik, wobei Strom durch Regasifizierung von Flüssigerdgas erzeugt wird.

Aufgabe der Erfindung ist es, eine Vorrichtung und ein Verfahren zur Speicherung und Rückverstromung mit hohem Wirkungsgrad bereitzustellen, das zugleich auch kostengünstig, einfach und zuverlässig ist.

Die Erfindung löst die auf eine Vorrichtung gerichtete Aufgabe, indem sie vorsieht, dass bei einer derartigen Vorrichtung zur Stromerzeugung bei Regasifizierung, umfassend einen Tank für ein kryogenes Fluid, eine über eine erste Leitung mit dem Tank verbundene erste Pumpe, einen mit der ersten Pumpe über eine zweite Leitung verbundenen ersten Wärmeübertrager und einen dem ersten Wärmeübertrager nachgeschalteten zweiten Wärmeübertrager, sowie eine dem zweiten Wärmeübertrager unmittelbar nachgeschaltete erste Turbine, von der ersten Turbine eine dritte Leitung abzweigt und in den ersten Wärmeübertrager mündet und von diesem ersten Wärmeübertrager eine vierte Leitung abzweigt und zwischen erster Pumpe und zweitem Wärmeübertrager in die zweite Leitung mündet, wobei eine zweite Pumpe in die vierte Leitung geschaltet ist.

In einer vorteilhaften Ausführungsform ist ein dritter Wärmeübertrager in die zweite Leitung und in die vierte Leitung stromauf der zweiten Pumpe geschaltet. Dieser dritte Wärmeübertrager (Rekuperator) steigert die erzielbare elektrische Leistung der Vorrichtung, ist aber nicht zwingend notwendig, so dass er auch weggelassen werden kann, um Investitionskosten zu sparen. Die elektrische Leistung der Vorrichtung sinkt beim Weglassen des Rekuperators um ca. 1%.

Es ist zweckmäßig, wenn eine fünfte Leitung von der ersten Turbine abzweigt und in eine Pipeline mündet. Alternativ und abhängig vom verwendeten Medium ist aber auch eine Gasturbinenbrennkammer, ein Kältespeicher oder eine Abblasung in die Atmosphäre nach weiterer Entspannung denkbar.

Es ist ferner zweckmäßig, wenn in die fünfte Leitung ein vierter Wärmeübertrager geschaltet ist.

Falls der erforderliche Pipelinedruck niedriger als der notwendige überkritische Entspannungsdruck sein sollte, kann der zur Pipeline gehende Strom in einer weiteren Turbinenstufe auf das Niveau des Pipelinedrucks expandiert werden. In diesem Fall ist in die fünfte Leitung eine zweite Turbine geschaltet und der vierte Wärmeübertrager wäre dann stromab der zweiten Turbine angeordnet.

Dabei kann vor der letzten Expansionsstufe eine Anwärmung erfolgen. D.h., es ist zweckmäßig, wenn ein fünfter Wärmeübertrager stromauf der zweiten Turbine in der fünften Leitung angeordnet ist.

In einer alternativen vorteilhaften Ausführungsform sind erster Wärmeübertrager, dritter Wärmeübertrager und Einspeisestelle der vierten in die zweite Leitung in einer Komponente integriert.

In einer bevorzugten Ausführungsform der Erfindung enthält der Tank Flüssigerdas (LNG). Aber auch flüssige Luft, flüssiger Stickstoff, flüssiger Sauerstoff oder flüssiges Argon sind in Frage kommende Fluide.

Die Grundidee der Erfindung ist, dass beispielsweise Erdgas als Arbeitsmedium in der Turbine auf einen überkritischen Druck entspannt wird. Dadurch kann ein großer Teilstrom wieder zurückgeführt werden, auf Druck gepumpt werden und vor der Entspannung in der Turbine Wärme aus der Umgebung und/oder anderen Prozessen aufnehmen. Somit kann mit geringstem Aufwand die elektrische Leistung erhöht werden. Die Rückführung des Teilstroms zu einer Pumpe, die mit ausreichend niedriger Leistungsaufnahme arbeitet, ist nur durch eine überkritische Entspannung möglich, weil dadurch in dem Erdgas-Erdgas-Wärmeübertrager die beiden Stoffströme einen ähnlichen Temperaturverlauf zeigen, kleine Grädigkeiten entstehen und damit ein guter Wärmetransfer erzielt werden kann. Die Pumpeneintrittstemperatur ist dadurch ausreichend niedrig und die Pumpenleistung entsprechend klein.

Die auf ein Verfahren gerichtete Aufgabe wird daher gelöst durch ein Verfahren zur Stromerzeugung bei dem ein Fluid auf einen ersten Druck gebracht wird und somit ein Hochdruckstrom erzeugt wird, dieser Hochdruckstrom mit einem zweiten Fluidstrom, der größer als der Hochdruckstrom ist, zusammengeführt wird, und der entstehende Gesamtfluidstrom zu einem ersten Wärmeübertrager geführt wird, in dem der Gesamtfluidstrom durch den zweiten Fluidstrom erwärmt wird, wobei anschließend der erwärmte Gesamtfluidstrom in einem zweiten Wärmeübertrager durch Eintragung von Umgebungswärme und/oder Abfallwärme aus anderen Prozessen weiter angewärmt wird und der weiter angewärmte Gesamtfluidstrom in einer ersten Turbine auf einen niedrigeren, aber überkritischen Druck entspannt wird, wobei der aus der ersten Turbine austretende Gesamtfluidstrom sich in den zweiten Fluidstrom und in einen kleineren dritten Fluidstrom aufteilt und der zweite Fluidstrom, nachdem er seine Wärme an den Gesamtfluidstrom abgegeben hat, auf das Druckniveau des Hochdruckstroms gebracht wird.

Dabei ist es vorteilhaft, wenn der zweite Fluidstrom, bevor er auf das Druckniveau des Hochdruckstroms gebracht wird, durch einen dritten Wärmeübertrager noch weiter abgekühlt wird, wobei der Hochdruckstrom erwärmt wird.

Zweckmäßiger Weise wird das Fluid aus einem Tank entnommen. Das Verfahren bezieht sich schließlich auf die Regasifizierung flüssiger Medien, die in Tanks gespeichert werden.

Es ist vorteilhaft, wenn mittels einer ersten Pumpe das aus dem Tank entnommene Fluid auf einen Druck von über 150 bara gebracht wird.

Es ist von Vorteil, wenn die weitere Anwärmung zu einer möglichst hohen Turbineneintrittstemperatur führt. Wenn nur Umgebungswärme zur Verfügung steht, ist es vorteilhaft, wenn die weitere Anwärmung so dicht wie möglich an die Umgebungstemperatur heranreicht, mindestens aber bis auf 5°C unterhalb der Umgebungstemperatur erfolgt. Es ist vorteilhaft, wenn die Umgebungswärme Luft oder Meerwasser entnommen wird.

Es ist ferner vorteilhaft, wenn der niedrigere, aber überkritische Druck bei über 70 bara liegt. Die Vorteile der überkritischen Entspannung wurden bereits oben ausgeführt.

Eine mögliche sinnvolle Nutzung des dritten Fluidstroms ist seine Einspeisung in eine Pipeline zur weiteren Verwendung, beispielsweise, wenn das dem Tank entnommene Fluid Flüssigerdgas ist. Aber auch andere Fluide können im erfinderischen Verfahren zum Einsatz kommen, wie z.B. flüssige Luft, flüssiger Stickstoff, flüssiger Sauerstoff oder flüssiges Argon.

Zur weiteren Verbesserung des Wirkungsgrads kann es vorteilhaft sein, wenn in der ersten Turbine mehrstufig entspannt und zwischenerwärmt wird.

Mit der Erfindung ergeben sich folgende Vorteile:
- Der Wirkungsgrad ist vergleichsweise hoch.
- Es ist ein sehr einfaches Konzept. Mit wenig Aufwand kann eine robuste Regelung und Automatisierung erstellt werden.
- Durch die geringe Anzahl von Komponenten und Maschinen ist eine große betriebliche Flexibilität möglich. Schnelle Lastwechsel stellen ebenfalls kein großes Problem dar.
- Außer dem Fluid selber (beispielsweise Erdgas) ist kein weiteres Arbeitsmedium erforderlich.
- Auf Grund der geringen Komplexität bietet das neue Verfahren eine geringe Fehleranfälligkeit und demzufolge eine hohe Verfügbarkeit, was für die Kundenakzeptanz sehr wichtig ist.
- Es ist im Gegensatz zu anderen in der Literatur theoretisch behandelten Verfahren kein Aufwand für die Neuentwicklung von Komponenten erforderlich.
- Durch die große übertragene Wärme zwischen den (beispielsweise) Erdgasströmen ist die Temperatur des Erdgases, welches noch durch Umgebungswärme angewärmt werden muss, schon recht hoch. Dadurch ergeben sich kostengünstigere Wärmeübertrager, da nun das Einfrieren von Meerwasser bzw. Ausfrieren von Luftfeuchtigkeit deutlich weniger Probleme bereitet.

Es können sowohl für geplante LNG- Terminals wie auch für bestehende Terminals als Nachrüstung komplette Lösungen für die Stromerzeugung bei der Regasifizierung angeboten werden.

Aus Kundensicht ergibt sich die Möglichkeit, bei überschaubaren Investitionskosten die Betriebskosten deutlich zu reduzieren, da mit der neuen Lösung der Eigenbedarf reduziert werden kann und evtl. sogar überschüssiger Strom ins Netz gespeist werden kann.

Im Vergleich zu gängigen Regasifizierungslösungen, bei denen ein Teil des Erdgases für die Verdampfung verbrannt wird, erhöht sich die Wirtschaftlichkeit deutlich, da nun der Gesamtstrom in die Pipeline eingespeist werden kann und zudem Strom produziert wird.

Die Erfindung wird beispielhaft anhand der Zeichnungen näher erläutert. Es zeigen schematisch und nicht maßstäblich:
Figur 1 eine Grundschaltung zum Prozess für Stromerzeugung nach der Erfindung,
Figur 2 eine Schaltung für niedrigeren Pipelinedruck,
Figur 3 eine Schaltung zur Kostenoptimierung durch Wegfall des Rekuperators,
Figur 4 eine Ausführung mit integriertem Wärmeübertrager und
Figur 5 ein Ablaufdiagramm für das erfinderische Verfahren.

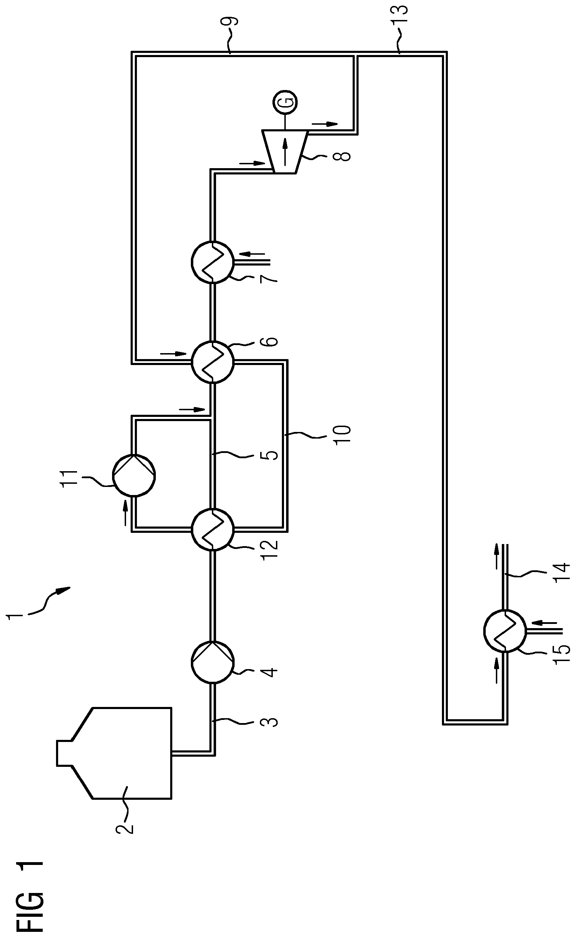

Die Figur 1 zeigt schematisch und beispielhaft die Grundschaltung für die Vorrichtung 1 zur Stromerzeugung bei Regasifizierung gemäß der Erfindung. Die Vorrichtung 1 umfasst einen Tank 2 für ein kryogenes Fluid, vorzugsweise flüssiges Erdgas (LNG), aber auch flüssige Luft, flüssiger Stickstoff, flüssiger Sauerstoff oder flüssiges Argon sind möglich. Eine erste Pumpe 4 ist über eine erste Leitung 3 mit dem Tank 2 verbunden. Eine zweite Leitung 5 verbindet die erste Pumpe 4 mit einem ersten Wärmeübertrager 6, dem ein zweiter Wärmeübertrager 7 nachgeschaltet ist, dem wiederum eine erste Turbine 8 nachgeschaltet ist. Gemäß der Erfindung zweigt von der ersten Turbine 8 eine dritte Leitung 9 ab und mündet in den ersten Wärmeübertrager 6, von dem wiederum eine vierte Leitung 10 abzweigt und in die zweite Leitung 5 mündet.

In diese vierte Leitung 10 ist eine zweite Pumpe 11 geschaltet sowie, stromauf der zweiten Pumpe 11, ein dritter Wärmeübertrager 12. Der dritte Wärmeübertrager 12 ist ferner in die zweite Leitung 5 geschaltet.

Im Ausführungsbeispiel der Figur 1 zweigt eine fünfte Leitung 13 von der ersten Turbine 8 ab und mündet in eine Pipeline 14. Ferner ist in die fünfte Leitung 13 ein vierter Wärmeübertrager 15 geschaltet.

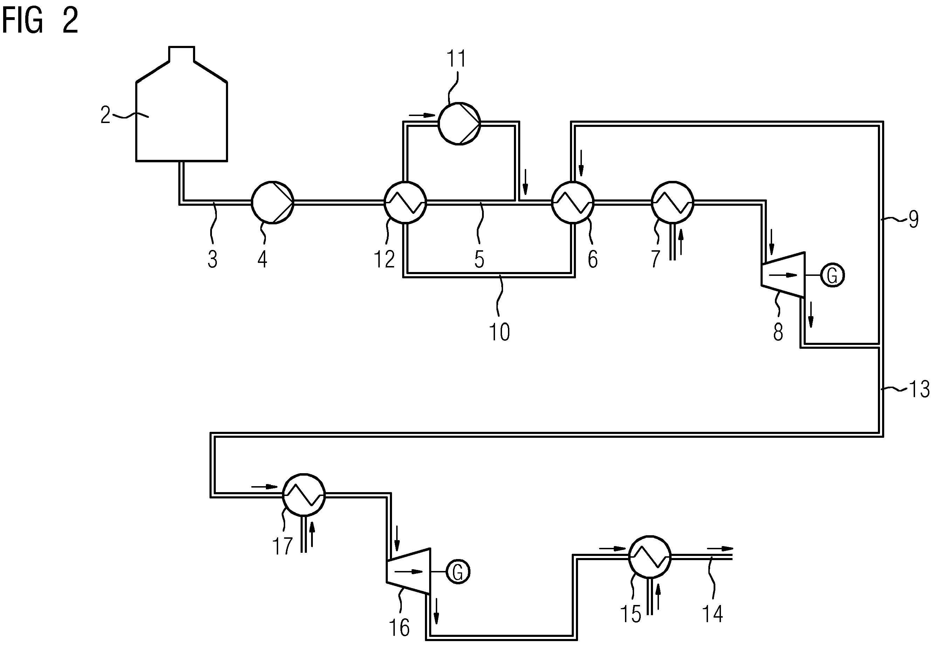

Die Schaltung der Figur 2 ist für einen niedrigeren Pipelinedruck optimiert. Hierbei ist in die fünfte Leitung 13 eine zweite Turbine 16 geschaltet, wobei der vierte Wärmeübertrager 15 stromab der zweiten Turbine 16 angeordnet ist. Außerdem ist ein fünfter Wärmeübertrager 17 stromauf der zweiten Turbine 16 in der fünften Leitung 13 angeordnet.

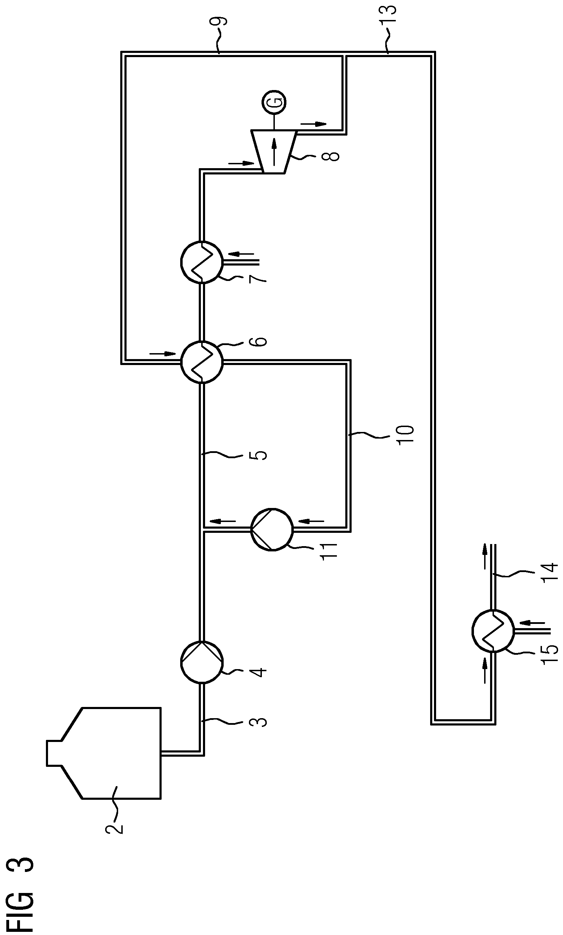

Das Ausführungsbeispiel der Figur 3 dient der Kostenoptimierung. Der dritte Wärmeübertrager 12 in Leitung 10 entfällt. Das Fluid gelangt direkt vom ersten Wärmeübertrager 6 zur zweiten Pumpe 11, bevor es in die zweite Leitung 5 rückgespeist wird.

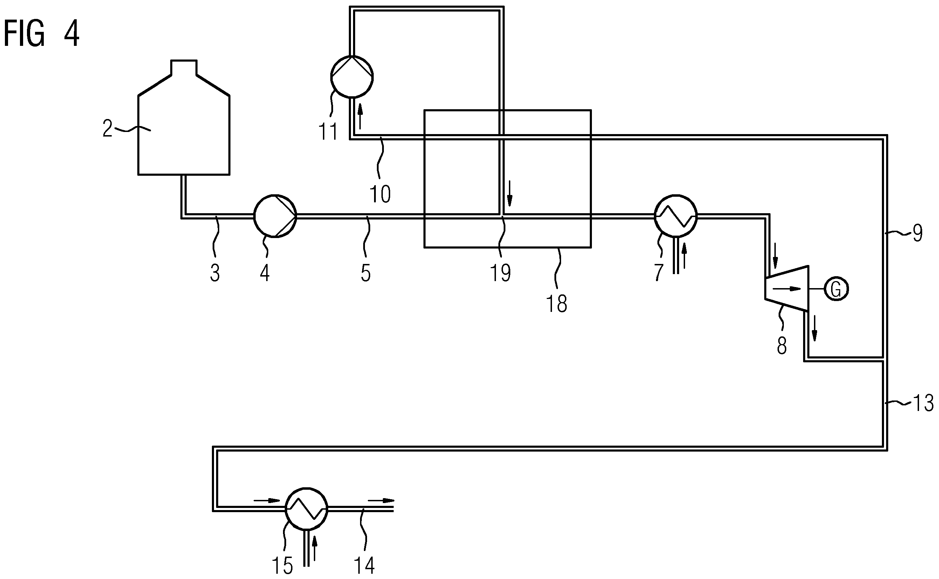

Figur 4 zeigt schließlich eine Ausführung mit integriertem Wärmeübertrager 18, d.h. erster Wärmeübertrager 6, dritter Wärmeübertrager 12 und Einspeisestelle 19 der vierten 10 in die zweite Leitung 5 sind in einer Komponente integriert.

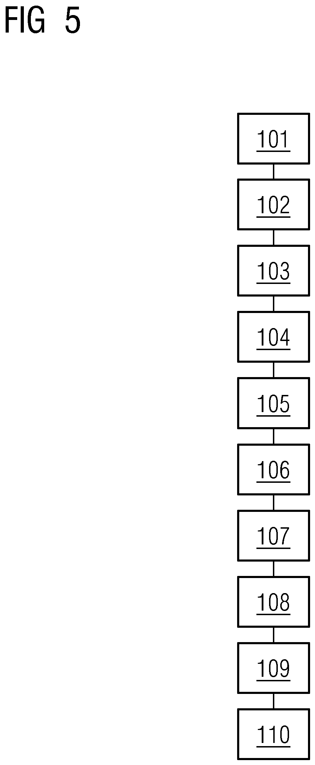

Figur 5 zeigt ein Diagramm zum Verfahren zur Stromerzeugung. In einem ersten Schritt 101 wird das Fluid - flüssige Luft, Flüssigerdgas, flüssiger Stickstoff, flüssiger Sauerstoff oder flüssiges Argon - aus einem Tank 2 entnommen.

In einem zweiten Schritt 102 wird das dem Tank 2 entnommene Fluid auf einen ersten Druck gebracht und somit ein Hochdruckstrom erzeugt. Dieser erste Druck liegt bei über 150 bara.

Dieser Hochdruckstrom wird in einem dritten Schritt 103 mit einem zweiten Fluidstrom, der größer als der Hochdruckstrom ist, zusammengeführt.

In einem vierten Schritt 104 wird der entstehende Gesamtfluidstrom zu einem ersten Wärmeübertrager 6 geführt, in dem der Gesamtfluidstrom durch den zweiten Fluidstrom erwärmt wird.

In einem fünften Schritt 105 wird der erwärmte Gesamtfluidstrom in einem zweiten Wärmeübertrager 7 durch Eintragung von Umgebungswärme und/oder Abfallwärme aus anderen Prozessen weiter angewärmt. Im Fall von Umgebungswärme kann dies über Luft oder beispielsweise Meerwasser erfolgen und die erzielbare Temperatur soll so nah wie möglich an die Umgebungstemperatur heranreichen. Die erreichbare Temperatur hängt von der Grädigkeit der verwendeten Wärmeübertrager ab. Die Zieltemperatur sollte möglichst hoch, jedenfalls nicht mehr als 5°C unter der Umgebungstemperatur liegen.

In einem sechsten Schritt 106 wird der weiter angewärmte Gesamtfluidstrom in einer ersten Turbine 8 auf einen niedrigeren, aber überkritischen Druck entspannt. Dieser Druck liegt typischerweise bei über 70 bara.

Die Schritte fünf 105 und sechs 106 können je nach Ausführungsform wiederholt werden, so dass in der ersten Turbine 8 mehrstufig entspannt und zwischenerwärmt wird.

In einem siebten Schritt 107 wird der aus der ersten Turbine 8 austretende Gesamtfluidstrom in den zweiten Fluidstrom und in einen kleineren dritten Fluidstrom aufgeteilt.

In einem achten Schritt 108 gibt der zweite Fluidstrom Wärme an den Gesamtfluidstrom ab.

In einem neunten Schritt 109 wird der zweite Fluidstrom auf das Druckniveau des Hochdruckstroms gebracht, bevor er mit diesem zusammengeführt wird (Schritt 3).

In einem zehnten Schritt 110 wird der dritte Fluidstrom in eine Pipeline 14 eingespeist.

## Patentansprüche

1. Vorrichtung (1) zur Stromerzeugung bei Regasifizierung, umfassend einen Tank (2) für ein kryogenes Fluid, eine über eine erste Leitung (3) mit dem Tank (2) verbundene erste Pumpe (4), einen mit der ersten Pumpe (4) über eine zweite Leitung (5) verbundenen ersten Wärmeübertrager (6) und einen dem ersten Wärmeübertrager (6) nachgeschalteten zweiten Wärmeübertrager (7), sowie eine dem zweiten Wärmeübertrager (7) unmittelbar nachgeschaltete erste Turbine (8), wobei von der ersten Turbine (8) eine dritte Leitung (9) abzweigt und in den ersten Wärmeübertrager (6) mündet, **dadurch gekennzeichnet, dass** von diesem ersten Wärmeübertrager (6) eine vierte Leitung (10) abzweigt und zwischen erster Pumpe (4) und zweitem Wärmeübertrager (7) in die zweite Leitung (5) mündet, wobei eine zweite Pumpe (11) in die vierte Leitung (10) geschaltet ist.

2. Vorrichtung (1) nach Anspruch 1, wobei ein dritter Wärmeübertrager (12) in die zweite Leitung (5) und in die vierte Leitung (10) stromauf der zweiten Pumpe (11) geschaltet ist.

3. Vorrichtung (1) nach einem der Ansprüche 1 oder 2, wobei eine fünfte Leitung (13) von der ersten Turbine (8) abzweigt und in eine Pipeline (14) mündet.

4. Vorrichtung (1) nach Anspruch 3, wobei in die fünfte Leitung (13) ein vierter Wärmeübertrager (15) geschaltet ist.

5. Vorrichtung (1) nach Anspruch 4, wobei in die fünfte Leitung (13) eine zweite Turbine (16) geschaltet ist und der vierte Wärmeübertrager (15) stromab der zweiten Turbine (16) angeordnet ist.

6. Vorrichtung (1) nach Anspruch 5, wobei ein fünfter Wärmeübertrager (17) stromauf der zweiten Turbine (16) in der fünften Leitung (13) angeordnet ist.

7. Vorrichtung (1) nach Anspruch 2, wobei erster Wärmeübertrager (6), dritter Wärmeübertrager (12) und Einspeisestelle (19) der vierten (10) in die zweite Leitung (5) in einem integrierten Wärmeübertrager (18) angeordnet sind.

8. Vorrichtung (1) nach einem der vorhergehenden Ansprüche, wobei der Tank (2) Flüssigerdgas (LNG) enthält.

9. Verfahren zur Stromerzeugung bei dem ein Fluid auf einen ersten Druck gebracht wird und somit ein Hochdruckstrom erzeugt wird, dieser Hochdruckstrom mit einem zweiten Fluidstrom, der größer als der Hochdruckstrom ist, zusammengeführt wird, und der entstehende Gesamtfluidstrom zu einem ersten Wärmeübertrager (6) geführt wird, in dem der Gesamtfluidstrom durch den zweiten Fluidstrom erwärmt wird, wobei anschließend der erwärmte Gesamtfluidstrom in einem zweiten Wärmeübertrager (7) durch Eintragung von Umgebungswärme und/oder Abfallwärme aus anderen Prozessen weiter angewärmt wird und der weiter angewärmte Gesamtfluidstrom in einer ersten Turbine (8) auf einen niedrigeren, aber überkritischen Druck entspannt wird, wobei der aus der ersten Turbine (8) austretende Gesamtfluidstrom sich in den zweiten Fluidstrom und in einen kleineren dritten Fluidstrom aufteilt und der zweite Fluidstrom, nachdem er Wärme an den Gesamtfluidstrom abgegeben hat, auf das Druckniveau des Hochdruckstroms gebracht wird.

10. Verfahren nach Anspruch 9, wobei der zweite Fluidstrom, bevor er auf das Druckniveau des Hochdruckstroms gebracht wird, durch einen dritten Wärmeübertrager (12) noch weiter abgekühlt wird, wobei der Hochdruckstrom erwärmt wird.

11. Verfahren nach einem der Ansprüche 9 oder 10, wobei das Fluid aus einem Tank (2) entnommen wird.

12. Verfahren nach Anspruch 11, wobei mittels einer ersten Pumpe (4) das aus dem Tank (2) entnommene Fluid auf einen Druck von über 150 bara gebracht wird.

13. Verfahren nach einem der Ansprüche 9 bis 12, wobei die Umgebungswärme Luft oder Meerwasser entnommen wird.

14. Verfahren nach einem der Ansprüche 9 bis 13, wobei die weitere Anwärmung auf mindestens 5°C unterhalb der Umgebungstemperatur erfolgt.

15. Verfahren nach einem der Ansprüche 9 bis 14, wobei der niedrigere, aber überkritische Druck bei über 70 bara liegt.

16. Verfahren nach einem der Ansprüche 9 bis 15, wobei der dritte Fluidstrom in eine Pipeline (14) eingespeist wird.

17. Verfahren nach einem der Ansprüche 9 bis 16, wobei in der ersten Turbine (8) mehrstufig entspannt und zwischenerwärmt wird.

18. Verfahren nach einem der Ansprüche 11 bis 17, wobei das dem Tank entnommene Fluid flüssige Luft, Flüssigerdgas, flüssiger Stickstoff, flüssiger Sauerstoff oder flüssiges Argon ist.

## Claims

1. Device (1) for generating power during regasification, comprising a tank (2) for a cryogenic fluid, a first pump (4) which is connected to the tank (2) via a first line (3), a first heat exchanger (6) which is connected to the first pump (4) via a second line (5), and a second heat exchanger (7) which is arranged downstream of the first heat exchanger (6), and also a first turbine (8) which is arranged directly downstream of the second heat exchanger (7), wherein a third line (9) branches off from the first turbine (8) and opens out into the first heat exchanger (6), **characterized in that** a fourth line (10) branches off from said first heat exchanger (6) and opens out into the second line (5) between the first pump (4) and the second heat exchanger (7), wherein a second pump (11) is incorporated into the fourth line (10).

2. Device (1) according to Claim 1, wherein a third heat exchanger (12) is incorporated into the second line (5) and into the fourth line (10) upstream of the second pump (11).

3. Device (1) according to either of Claims 1 and 2, wherein a fifth line (13) branches off from the first turbine (8) and opens out into a pipeline (14).

4. Device (1) according to Claim 3, wherein a fourth heat exchanger (15) is incorporated into the fifth line (13).

5. Device (1) according to Claim 4, wherein a second turbine (16) is incorporated into the fifth line (13), and the fourth heat exchanger (15) is arranged downstream of the second turbine (16).

6. Device (1) according to Claim 5, wherein a fifth heat exchanger (17) is arranged in the fifth line (13) upstream of the second turbine (16).

7. Device (1) according to Claim 2, wherein the first heat exchanger (6), the third heat exchanger (12) and a feed point (19) of the fourth line (10) into the second line (5) are arranged in an integrated heat exchanger (18).

8. Device (1) according to one of the preceding claims, wherein the tank (2) contains liquefied natural gas (LNG).

9. Method for generating power, in which a fluid is brought to a first pressure and a high-pressure stream is thereby generated, said high-pressure stream is merged with a second fluid stream, which is larger than the high-pressure stream, and the resulting total fluid stream is guided to a first heat exchanger (6) in which the total fluid stream is heated by the second fluid stream, wherein subsequently, the heated total fluid stream is heated further in a second heat exchanger (7) through introduction of ambient heat and/or waste heat from other processes, and the further heated total fluid stream is expanded in a first turbine (8) to a lower, but supercritical, pressure, wherein the total fluid stream exiting the first turbine (8) is divided into the second fluid stream and into a smaller, third fluid stream, and the second fluid stream, after having released heat to the total fluid stream, is brought to the pressure level of the high-pressure stream.

10. Method according to Claim 9, wherein the second fluid stream, before being brought to the pressure level of the high-pressure stream, is cooled even further by a third heat exchanger (12), wherein the high-pressure stream is heated.

11. Method according to either of Claims 9 and 10, wherein the fluid is extracted from a tank (2).

12. Method according to Claim 11, wherein the fluid extracted from the tank (2) is brought to a pressure of above 150 bara by means of a first pump (4).

13. Method according to one of Claims 9 to 12, wherein the ambient heat is extracted from air or seawater.

14. Method according to one of Claims 9 to 13, wherein the further heating is carried out to at least 5°C below the ambient temperature.

15. Method according to one of Claims 9 to 14, wherein the lower, but supercritical, pressure is above 70 bara.

16. Method according to one of Claims 9 to 15, wherein the third fluid stream is fed into a pipeline (14).

17. Method according to one of Claims 9 to 16, wherein multistage expansion and intermediate heating are carried out in the first turbine (8).

18. Method according to one of Claims 11 to 17, wherein the fluid extracted from the tank is liquid air, liquefied natural gas, liquid nitrogen, liquid oxygen or liquid argon.

## Revendications

1. Installation (1) de production d'électricité par regazéification, comprenant une cuve (2) de fluide cryogénique, une première pompe (4) communiquant avec la cuve (2) par un premier conduit (3), un premier échangeur de chaleur (6) communiquant avec la première pompe (4) par un deuxième conduit (5) et un deuxième échangeur de chaleur (7) monté en aval du premier échangeur de chaleur (6), ainsi qu'une première turbine (8) montée directement en aval du deuxième échangeur de chaleur (7),
dans laquelle un troisième conduit (9) bifurque de la première turbine (8) et débouche dans le premier échangeur de chaleur (6),
**caractérisée en ce que**
un quatrième conduit (18) bifurque de ce premier échangeur de chaleur (6) et débouche dans le deuxième conduit (5) entre la première pompe (4) et le deuxième échangeur de chaleur (7), une deuxième pompe (11) étant montée dans le quatrième conduit (10).

2. Installation (1) suivant la revendication 1, dans laquelle un troisième échangeur de chaleur (12) est monté en amont de la deuxième pompe (11) dans le deuxième conduit (5) et dans le quatrième conduit (10).

3. Installation (1) suivant l'une des revendications 1 ou 2, dans laquelle un cinquième conduit (13) bifurque de la première turbine (8) et débouche dans un oléoduc (14).

4. Installation (1) suivant la revendication 3, dans laquelle un quatrième échangeur de chaleur (15) est monté dans le cinquième conduit (13).

5. Installation (1) suivant la revendication 4, dans laquelle une deuxième turbine (16) est montée dans le cinquième conduit (13) et le quatrième échangeur de chaleur (15) est monté en aval de la deuxième turbine (16).

6. Installation (1) suivant la revendication 5, dans laquelle un cinquième échangeur de chaleur (17) est monté en amont de la deuxième turbine (16) dans le cinquième conduit (13).

7. Installation (1) suivant la revendication 2, dans laquelle le premier échangeur de chaleur (6), le troisième échangeur de chaleur (12) et un point (19) d'injection du quatrième conduit (10) dans le deuxième conduit (5) sont disposés dans un échangeur de chaleur (18) intégré.

8. Installation (1) suivant l'une des revendications précédentes, dans laquelle la cuve (2) contient du gaz naturel liquéfié (LNG).

9. Procédé de production d'électricité, dans lequel on met un fluide sous une première pression et on produit ainsi un courant sous haute pression, on réunit ce courant sous haute pression à un deuxième courant de fluide, qui est plus grand que le premier courant sous haute pression, et on envoie le courant de fluide d'ensemble ainsi créé à un premier échangeur de chaleur (6), dans lequel on chauffe le courant de fluide d'ensemble par le deuxième courant de fluide, dans lequel ensuite on continue à chauffer le courant de fluide d'ensemble chauffé dans un deuxième échangeur de chaleur (7) par apport de chaleur ambiante et/ou de chaleur résiduelle d'autres processus et on détend le courant de fluide d'ensemble, que l'on a continué à chauffer, dans une première turbine (8) jusqu'à une pression plus basse mais surcritique, dans lequel on sépare le courant de fluide d'ensemble sortant de la première turbine (8) en le deuxième courant de fluide et en un troisième courant de fluide plus petit et on met le deuxième courant de fluide, après qu'il a cédé de la chaleur au courant de fluide d'ensemble, au niveau de pression du courant sous haute pression.

10. Procédé suivant la revendication 9, dans lequel on continue encore à refroidir le deuxième courant de fluide, avant de le mettre au niveau de pression du courant sous haute pression, par un troisième échangeur de chaleur (12), le courant sous haute pression étant réchauffé.

11. Procédé suivant l'une des revendications 9 ou 10, dans lequel on soutire le fluide d'une cuve (2).

12. Procédé suivant la revendication 11, dans lequel au moyen d'une première pompe (4), on met le fluide soutiré de la cuve (2) à une pression de plus de 150 bars.

13. Procédé suivant l'une des revendications 9 à 12, dans lequel on prélève la chaleur ambiante de l'air ou de l'eau de mer.

14. Procédé suivant l'une des revendications 9 à 13, dans lequel on continue à chauffer jusqu'à au moins 5°C en dessous de la température ambiante.

15. Procédé suivant l'une des revendications 9 à 14, dans lequel la pression plus basse mais surcritique est supérieure à 70 bars.

16. Procédé suivant l'une des revendications 9 à 15, dans lequel on injecte le troisième courant de fluide dans un oléoduc (14) .

17. Procédé suivant l'une des revendications 9 à 16, dans lequel on détend et on chauffe intermédiairement en plusieurs stades dans la première turbine (8).

18. Procédé suivant l'une des revendications 11 à 17, **caractérisé en ce que** le fluide prélevé de la cuve est de l'air liquide, du gaz naturel liquéfié, de l'azote liquide, de l'oxygène liquide ou de l'argon liquide.
